# EUROPÄISCHE PATENTSCHRIFT

(11) **EP 3 615 268 B1**
(45) Veröffentlichungstag und Bekanntmachung des Hinweises auf die Patenterteilung: **28.06.2023**
(21) Anmeldenummer: 18729549.8
(22) Anmeldetag: 25.04.2018
(51) Int. Cl.: B23Q 3/155, B23Q 3/157, B23Q 39/00

(54) **BEARBEITUNGSANLAGE UND VERFAHREN ZUM DURCHFÜHREN EINES WERKZEUGWECHSELS AN DER BEARBEITUNGSANLAGE**
MACHINING FACILITY AND METHOD FOR CHANGING A TOOL IN THE MACHINING FACILITY
SYSTÈME D'USINAGE ET PROCÉDÉ POUR EFFECTUER UN CHANGEMENT D'OUTIL AU NIVEAU DU SYSTÈME D'USINAGE

(30) Priorität: 25.04.2017 AT 503342017
(43) Veröffentlichungstag der Anmeldung: 04.03.2020
(73) Patentinhaber: Fill Gesellschaft m.b.H., 4942 Gurten (AT)
(72) Erfinder: DALLINGER, Friedrich, 4942 Gurten (AT); FISCHER, Hannes, 4942 Gurten (AT)
(74) Vertreter: Burger, Hannes
(86) Internationale Anmeldenummer: PCT/AT2018/060078
(87) Internationale Veröffentlichungsnummer: WO 2018/195572

(56) Entgegenhaltungen:
- EP-A1- 0 319 914
- EP-A2- 1 291 125
- DE-A1- 4 215 697
- DE-A1-102012 111 230
- ES-A1- 2 246 130
- FR-A1- 2 108 232

## Beschreibung

Die Erfindung betrifft ein Verfahren zum Durchführen eines Werkzeugwechsels an einer Bearbeitungsanlage, sowie eine Bearbeitungsanlage mit einer Werkzeugwechselvorrichtung. Die DE102006038500A1 offenbart eine Bearbeitungsanlage mit einem Werkzeugmagazin. Die Transporte der Bearbeitungswerkzeuge zwischen Bearbeitungsspindel und dem Werkzeugmagazin dauern bei einer derart ausgebildeten Bearbeitungsanlage lange.

Die FR 2 108 232 A3, die ES 2 246 130 A1, die DE 42 15 697 A1 und die EP 1 291 125 A2 offenbaren weitere Bearbeitungsanlagen. Die FR 2 108 232 A3 stellt die Basis für die Oberbegriffe der Ansprüche 1 und 8 dar.

Aufgabe der vorliegenden Erfindung war es, die Nachteile des Standes der Technik zu überwinden und eine Vorrichtung und ein Verfahren zur Verfügung zu stellen, mittels welchem die Rüstzeiten möglichst kurz gehalten werden können, um die Nebenzeiten zu minimieren.

Diese Aufgabe wird durch eine Vorrichtung nach Anspruch 1 und ein Verfahren nach Anspruch 8 gelöst.

Von Vorteil am erfindungsgemäßen Verfahren ist, dass die Zeit welche benötigt wird, um ein Bearbeitungswerkzeug aus dem Werkzeugspeicher zu holen möglichst gering gehalten werden kann. Dies ist besonders von Vorteil, wenn die Bearbeitungsvorgänge eine nur sehr kurze Zeitdauer in Anspruch nehmen und möglichst schnell ein neues Bearbeitungswerkzeug benötigt wird.

Erfindungsgemäß ist vorgesehen, dass neben der ersten Arbeitsspindel eine zweite Arbeitsspindel angeordnet ist, wobei die Arbeitsspindeln parallel zueinander angeordnet sind und zur Aufnahme jeweils eines Bearbeitungswerkzeuges dienen und dass die Werkzeugwechselvorrichtung eine zweite Greifvorrichtung aufweist, wobei die beiden Greifvorrichtungen synchron zueinander bewegt werden und gleichzeitig die beiden Arbeitsspindeln bedienen. Somit können die beiden Arbeitsspindeln synchron zueinander betrieben werden.

Weiters kann es zweckmäßig sein, wenn zur Aufnahme eines neuen Bearbeitungswerkzeuges vom Werkzeugmagazin in die Greifvorrichtung und gleichzeitigem Ablegen des bereits benutzten Bearbeitungswerkzeuges von der Greifvorrichtung in das Werkzeugmagazin, die Bearbeitungswerkzeuge derart in der Speicherebene angeordnet sind, dass das neue Bearbeitungswerkzeug an einem ersten Werkzeugaufnahmeplatz angeordnet ist und im Greifeinheitenabstand zum ersten Werkzeugaufnahmeplatz ein zweiter Werkzeugaufnahmeplatz frei ist, welcher zum Ablegen des bereits benutzten Bearbeitungswerkzeuges von der Greifvorrichtung in das Werkzeugmagazin dient. Von Vorteil ist hierbei, dass durch diese Maßnahme die Greifvorrichtung mit den beiden Greifeinheiten und dem in einer Greifeinheit aufgenommenen Bearbeitungswerkzeug zur jeweiligen Speichereinheit bewegt werden kann, um das Bearbeitungswerkzeug ablegen zu können. Das Bearbeitungswerkzeug wird hierbei in den freien Werkzeugaufnahmeplatz geführt. Gleichzeitig wird mittels der noch freien Greifeinheit das neu vorgesehene Bearbeitungswerkzeug gegriffen und kann somit zur Arbeitsspindel der Bearbeitungsanlage geführt werden. Der Zeitaufwand zum Durchführen des Ablegens des alten Bearbeitungswerkzeuges und Aufnehmen des neuen Bearbeitungswerkzeuges kann deswegen so gering gehalten werden, da die Greifvorrichtung nicht zwei verschiedene Positionen im Werkzeugmagazin anfahren muss, sondern in einem Arbeitsvorgang das alte Bearbeitungswerkzeug abgelegt werden kann und gleichzeitig das neue Bearbeitungswerkzeug aufgenommen werden kann. Die Bearbeitungswerkzeuge sind hierbei so im Werkzeugmagazin positioniert, dass die beschriebenen Bearbeitungsschritte ermöglicht werden.

Ferner kann vorgesehen sein, dass Bearbeitungswerkzeuge in einer Werkzeugeinlegestation manuell eingelegt werden können und in weiterer Folge mittels einer Greifeinheit aufgenommen werden können. Von Vorteil ist hierbei, dass für zukünftig zu verwendende Bearbeitungsvorgänge vorgesehene Bearbeitungswerkzeuge eingelegt werden können und mittels der Greifeinheit zu einem freien Platz im Werkzeugmagazin bewegt werden können.

Darüber hinaus kann vorgesehen sein, dass bei ausgewählten Bearbeitungsvorgängen, insbesondere bei Bearbeitungsvorgängen mit langer Bearbeitungsdauer, während des Bearbeitens des Werkstückes, die im Werkzeugmagazin gelagerten Bearbeitungswerkzeuge mittels der Greifvorrichtung neu sortiert werden. Von Vorteil ist hierbei, dass die Bearbeitungswerkzeuge entsprechend den zukünftig vorgesehenen Bearbeitungsschritten neu sortiert werden können, um jeweils einen freien Werkzeugaufnahmeplatz neben einem einzuwechselnden Bearbeitungswerkzeug vorzufinden und somit den erfindungsgemäßen Werkzeugwechselvorgang zu ermöglichen.

Außerdem kann es zweckmäßig sein, wenn Bearbeitungswerkzeuge, welche in der Bearbeitungsreihenfolge auf jene Bearbeitungswerkzeuge folgen mittels denen kürzer andauernde Bearbeitungsschritte durchgeführt werden, näher an der Arbeitsspindel gelagert werden als Bearbeitungswerkzeuge, welche in der Bearbeitungsreihenfolge auf jene Bearbeitungswerkzeuge folgen mittels denen länger andauernde Bearbeitungsschritte durchgeführt werden. Durch diese Maßnahme kann erreicht werden, dass während der Bearbeitung mittels einem Bearbeitungswerkzeug mit kurzer Bearbeitungsdauer ein schneller Einwechselvorgang gewährleistet wird, da die Greifvorrichtung nur kurze Wegstrecken zurücklegen muss. Dadurch kann auch während dieser kurzen Zeitspanne ein neues Bearbeitungswerkzeug aus dem Werkzeugspeicher geholt werden.

Gemäß einer Weiterbildung ist es möglich, dass Bearbeitungswerkzeuge, welche öfter verwendet werden, näher an der Arbeitsspindel gelagert werden als Bearbeitungswerkzeuge welche weniger oft verwendet werden. Durch diese Maßnahme kann erreicht werden, dass bei den Bearbeitungswerkzeugen mit häufiger Verwendung ein schneller Einwechselvorgang gewährleistet wird, da die Greifvorrichtung nur kurze Wegstrecken zurücklegen muss.

Ferner kann es zweckmäßig sein, wenn das bereits benutzte Bearbeitungswerkzeug nach der Entnahme aus der Arbeitsspindel mittels der Greifvorrichtung einer Messvorrichtung zugeführt wird, in welcher eine Abnutzung des Bearbeitungswerkzeuges erfasst wird. Von Vorteil ist hierbei, dass durch diese Maßnahme die Abnützung des Bearbeitungswerkzeuges bzw. ein eventueller Bruch des Bearbeitungswerkzeuges erfasst werden kann. Dadurch kann noch vor dem Einlagern des Bearbeitungswerkzeuges in das Werkzeugmagazin ein Tausch des Bearbeitungswerkzeuges angefordert werden bzw. kann das Bearbeitungswerkzeug an einer entsprechenden Stelle abgelegt werden, wo es ausgetauscht werden kann.

Erfindungsgemäß ist eine Bearbeitungsanlage nach Anspruch 8 vorgesehen.

Von Vorteil an der erfindungsgemäßen Bearbeitungsanlage ist, dass die Zeit welche benötigt wird, um ein Bearbeitungswerkzeug aus dem Werkzeugspeicher zu holen möglichst gering gehalten werden kann. Dies ist besonders von Vorteil, wenn die Bearbeitungsvorgänge eine nur sehr kurze Zeitdauer in Anspruch nehmen und möglichst schnell ein neues Bearbeitungswerkzeug benötigt wird.

Weiters kann vorgesehen sein, dass der Abstand zwischen zwei zueinander benachbarten Werkzeugaufnahmeplätzen einer Speicherebene, dem Greifeinheitenabstand oder einem Stammbruch des Greifeinheitenabstandes entspricht. Mit anderen Worten ausgedrückt, dass Greifeinheitenabstand ein ganzzahliges vielfaches des Abstandes zwischen zwei zueinander benachbarten Werkzeugaufnahmeplätzen einer Speicherebene ist. Von Vorteil ist hierbei, dass durch diese Maßnahme gleichzeitig ein bereits benutztes Bearbeitungswerkzeug im Werkzeugspeicher abgelegt werden kann und ein für zukünftige Bearbeitungsschritte vorgesehenes Bearbeitungswerkzeug aus dem Werkzeugspeicher entnommen werden kann.

Gemäß einer besonderen Ausprägung ist es möglich, dass im Werkzeugmagazin mehrere Speicherebenen übereinander angeordnet sind, wobei der Abstand zwischen zwei zueinander benachbarten Werkzeugaufnahmeplätzen in den verschiedenen Speicherebenen unterschiedlich groß ist. Dadurch können die verschiedenen Speicherebenen zur Aufnahme von verschieden großen Bearbeitungswerkzeugen ausgebildet sein.

Entsprechend einer vorteilhaften Weiterbildung kann vorgesehen sein, dass die Greifvorrichtungen in Querrichtung verschiebbar an einem Greifvorrichtungsträger gelagert sind.

Insbesondere kann es vorteilhaft sein, wenn die Greifvorrichtungen mittels einem zentralen Antriebsmotor in Querrichtung verschiebbar sind und gegengleich zueinander verschoben werden. Von Vorteil ist hierbei, dass nur ein Antriebsmotor benötigt wird, um die Greifvorrichtungen zu verschieben. Die Greifvorrichtungen können somit für beide Arbeitsspindeln synchron betrieben werden.

Ferner kann vorgesehen sein, dass die Greifvorrichtungen bezüglich einer Hochachse schwenkbar am Greifvorrichtungsträger gelagert sind. Dadurch können die Greifvorrichtungen Bearbeitungswerkzeuge aus dem Werkzeugmagazin entnehmen, welche beispielsweise in einem Winkel von 90° zur Spindelachse der Arbeitsspindel gelagert sind. Der mögliche Schwenkwinkel kann natürlich auch größer 90° sein.

Darüber hinaus kann vorgesehen sein, dass der Greifvorrichtungsträger höhenverstellbar an einer Höhenverstelleinrichtung gelagert ist. Durch diese Maßnahme können verschiedene Speicherebenen im Werkzeugmagazin erreicht werden.

Vorteilhaft ist auch eine Ausprägung, gemäß welcher vorgesehen sein kann, dass die Höhenverstelleinrichtung mittels einer Linearführung in einer parallel zur Spindelachse der Arbeitsspindel verlaufenden Längsrichtung verschiebbar gelagert ist.

Gemäß einer Weiterbildung ist es möglich, dass die Linearführung mittig der Bearbeitungsanlage angeordnet ist.

Ferner kann es zweckmäßig sein, wenn ein erster Werkzeugmagazinabschnitt ausgebildet ist, welcher der ersten Arbeitsspindel zugeordnet ist und ein zweiter Werkzeugmagazinabschnitt ausgebildet ist, welcher der zweiten Arbeitsspindel zugeordnet ist, wobei die beiden Werkzeugmagazinabschnitte symmetrisch bezüglich einer Mittelebene an der Bearbeitungsanlage angeordnet sind. Von Vorteil ist hierbei, dass die Bearbeitungswerkzeuge für die erste Arbeitsspindel und für die zweite Arbeitsspindel gleichzeitig und parallel zueinander im Werkzeugmagazin eingelagert bzw. aus diesem entnommen werden können.

Weiters kann vorgesehen sein, dass das Werkzeugmagazin zwei im Abstand zueinander angeordnete Speichersysteme mit jeweils mehreren übereinander angeordneten Werkzeugaufnahmeplätzen aufweist, wobei die Speichersysteme relativ zueinander höhenverstellbar sind, sodass verschiedene Paarungen von Werkzeugaufnahmeplätzen einstellbar sind. Beispielsweise kann vorgesehen sein, dass die beiden Speichersysteme jeweils ein Paternostersystem mit mehreren Werkzeugaufnahmeplätzen aufweisen. In einer weiteren Ausführungsvariante kann auch vorgesehen sein, dass die beiden Speichersysteme jeweils ein Linearschienensystem aufweisen. Natürlich ist vorgesehen, dass jeder der Arbeitsspindeln ein derartiger Aufbau von Speichersystemen zugeordnet ist.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Darstellung eines Ausführungsbeispiels einer Bearbeitungsanlage;
- Fig. 2: eine perspektivische Darstellung eines Ausführungsbeispiels einer Werkzeugwechselvorrichtung;
- Fig. 3: eine schematische Darstellung eines ersten Bearbeitungsschrittes bei einem Werkzeugwechselvorgang;
- Fig. 4: eine schematische Darstellung eines zweiten Bearbeitungsschrittes bei einem Werkzeugwechselvorgang;
- Fig. 5: eine schematische Darstellung eines dritten Bearbeitungsschrittes bei einem Werkzeugwechselvorgang;
- Fig. 6: eine schematische Darstellung eines vierten Bearbeitungsschrittes bei einem Werkzeugwechselvorgang.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

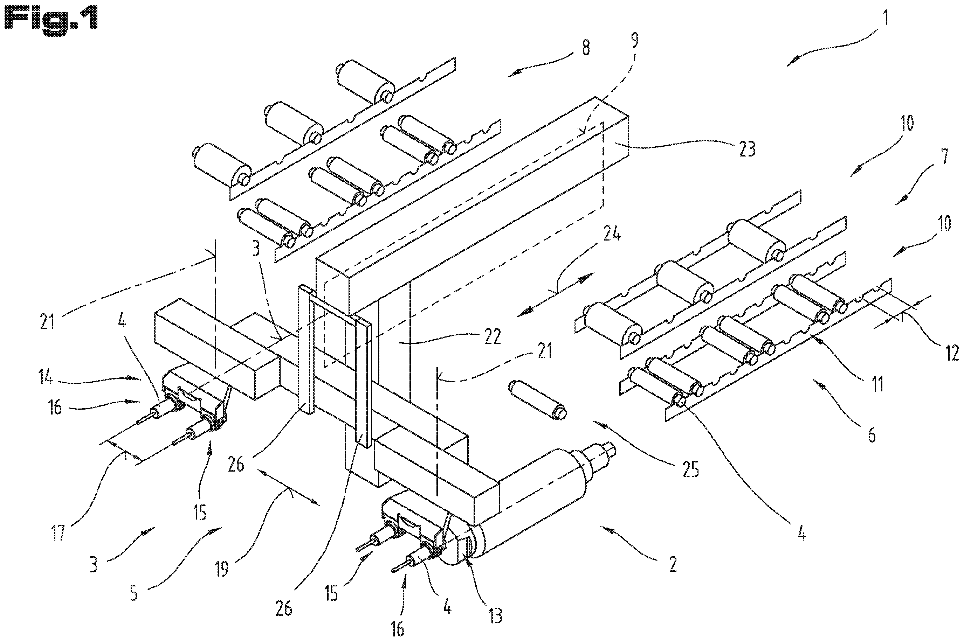

Fig. 1 zeigt in einer schematischen Darstellung eine perspektivische Ansicht eines Ausführungsbeispiels der Bearbeitungsanlage 1. Die Bearbeitungsanlage 1 dient insbesondere zur spanabhebenden Bearbeitung von Werkstücken, wobei eine erste Arbeitsspindel 2 und eine zweite Arbeitsspindel 3 ausgebildet sind, in welcher Bearbeitungswerkzeuge 4 aufgenommen werden können. Um den Kern der Erfindung darzustellen, sind wesentliche Bestandteile der Bearbeitungsanlage 1 ausgeblendet. Die erste Arbeitsspindel 2 ist schematisch angedeutet. Die zweite Arbeitsspindel 3 ist der Übersichtlichkeit halber nur durch eine Mittellinie angedeutet.

In Fig. 1 sind eine Werkzeugwechselvorrichtung 5 zum Wechsel der Bearbeitungswerkzeuge 4 und ein Werkzeugmagazin 6 zur Aufnahme der Bearbeitungswerkzeuge 4 dargestellt.

Das Werkzeugmagazin 6 dient insbesondere zum Bereitstellen und zum Speichern von unterschiedlichen Bearbeitungswerkzeugen 4 für unterschiedliche Bearbeitungsvorgänge. Wie aus Fig. 1 ersichtlich, kann vorgesehen sein, dass das Werkzeugmagazin 6 einen ersten Werkzeugmagazinabschnitt 7 und einen zweiten Werkzeugmagazinabschnitt 8 aufweist, welche symmetrisch bezüglich einer Mittelebene 9 ausgebildet sind. Somit ist vorgesehen, dass der erste Werkzeugmagazinabschnitt 7 der ersten Arbeitsspindel 2 zugeordnet ist und der zweite Werkzeugmagazinabschnitt 8 der zweiten Arbeitsspindel 3 zugeordnet ist.

In den einzelnen Werkzeugmagazinabschnitten 7, 8 können mehrere Speicherebenen 10 mit jeweils mehreren Werkzeugaufnahmeplätzen 11 ausgebildet sein. Die Werkzeugaufnahmeplätze 11 sind in den einzelnen Speicherebenen 10 nebeneinander angeordnet, wobei ein Abstand 12 zwischen zwei nebeneinander angeordneten Werkzeugaufnahmeplätzen 11 in unterschiedlichen Speicherebenen 10 unterschiedlich groß sein kann. Beispielsweise kann vorgesehen sein, dass eine Speicherebene 10 zur Aufnahme von großen Bearbeitungswerkzeugen 4 ausgebildet ist, wobei der Abstand 12 der einzelnen Werkzeugaufnahmeplätze 11 zueinander doppelt so groß ist wie bei einer weiteren Speicherebene in welcher kleinere Bearbeitungswerkzeuge 4 aufgenommen sind.

Wie aus Fig. 1 weiters ersichtlich, weist die Werkzeugwechselvorrichtung 5 eine erste Greifvorrichtung 13 und eine zweite Greifvorrichtung 14 auf. Die erste Greifvorrichtung 13 dient zum Transfer von Bearbeitungswerkzeugen 4, welche im ersten Werkzeugmagazinabschnitt 7 eingelagert sind, zur ersten Arbeitsspindel 2. Die zweite Greifvorrichtung 14 dient zum Transfer von Bearbeitungswerkzeugen 4, welche im zweiten Werkzeugmagazinabschnitt 8 eingelagert sind, zur zweiten Arbeitsspindel 3.

Da die Bearbeitungsschritte der Arbeitsspindeln 2, 3 parallel bzw. synchron zueinander erfolgen, ist auch vorgesehen, dass die Bearbeitungswerkzeuge 4 der beiden Arbeitsspindeln 2, 3 gleichzeitig eingewechselt werden. Somit sind im ersten Werkzeugmagazinabschnitt 7 und im zweiten Werkzeugmagazinabschnitt 8 symmetrisch zueinander die gleichen Bearbeitungswerkzeuge 4 gelagert.

Wie aus Fig. 1 weiters ersichtlich, sind sowohl an der ersten Greifvorrichtung 13 als auch an der zweiten Greifvorrichtung 14 jeweils eine erste Greifeinheit 15 und eine zweite Greifeinheit 16 ausgebildet. Die erste Greifeinheit 15 und die zweite Greifeinheit 16 dienen jeweils zur Entnahme des bereits benutzen Bearbeitungswerkzeuges 4 aus der Arbeitsspindel 2, 3 bzw. zum Einsetzen eines neuen Bearbeitungswerkzeuges 4 in die Arbeitsspindel 2, 3.

Bedingt durch den Verfahrensablauf beim Werkzeugwechsel wird jeweils abwechselnd das bereits benutze Bearbeitungswerkzeug 4 einmal in der ersten Greifeinheit 15 und einmal in der zweiten Greifeinheit 16 aufgenommen. In der jeweils anderen Greifeinheit 15, 16 wird das neue Bearbeitungswerkzeug 4 bereit gestellt.

Die beiden Greifeinheiten 15, 16 sind in einem Greifeinheitenabstand 17 zueinander angeordnet. Der Greifeinheitenabstand 17 und der Abstand 12 zwischen zwei zueinander benachbarten Werkzeugaufnahmeplätzen 11 können beispielsweise gleich groß sein. Darüber hinaus ist es auch denkbar, dass der Greifeinheitenabstand 17 einen ganzzahligen vielfachen des Abstandes 12 zwischen zwei zueinander benachbarten Werkzeugaufnahmeplätzen 11 entspricht. Oder anders ausgedrückt, dass der Abstand 12 zwischen zwei zueinander benachbarten Werkzeugaufnahmeplätzen 11 einen Bruchteil des Greifeinheitenabstandes 17 beträgt.

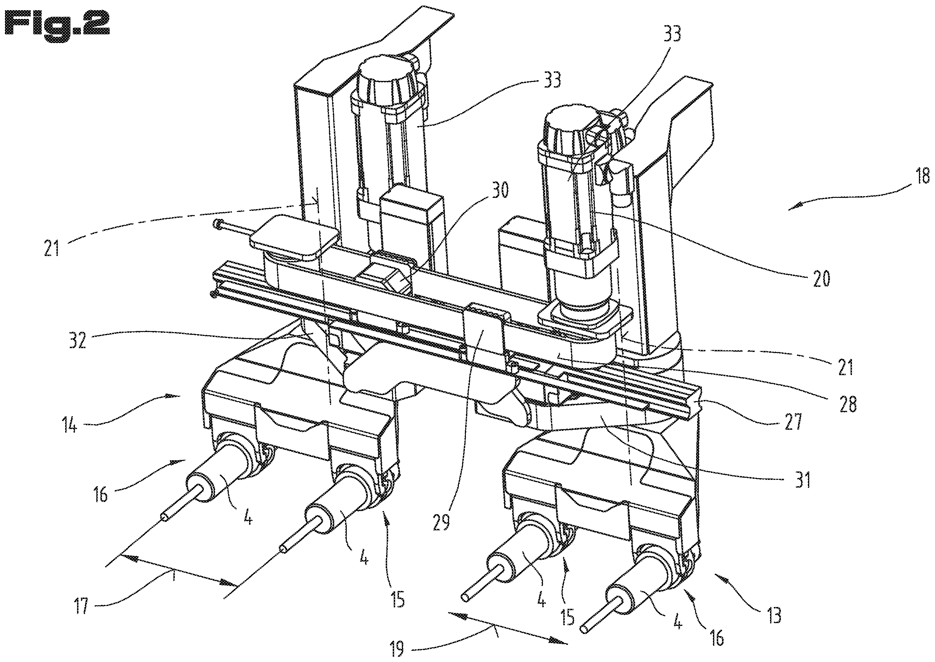

Die erste Greifvorrichtung 13 bzw. die zweite Greifvorrichtung 14 sind an einem Greifvorrichtungsträger 18 angeordnet, welcher in der Fig. 2 noch näher beschrieben ist bzw. anhand der Darstellung in Fig. 2 erklärt wird. Die beiden Greifvorrichtungen 13, 14 sind in Querrichtung 19 relativ zueinander bzw. relativ zum Greifvorrichtungsträger 18 verschiebbar. Dies kann vorzugsweise mittels einem zentralen Antriebsmotor 20 erreicht werden.

Außerdem ist vorgesehen, dass die beiden Greifvorrichtungen 13, 14 um eine Hochachse 21 schwenkbar am Greifvorrichtungsträger 18 angeordnet sind.

Der Greifvorrichtungsträger 18 ist an einer Höhenverstelleinrichtung 22 gelagert, mittels welcher dieser in dessen Höhe verlagert werden kann. Dadurch können sowohl die Arbeitsspindeln 2, 3 als auch die verschiedenen Speicherebenen 10 des Werkzeugmagazins 6 mittels der Greifvorrichtungen 13, 14 erreicht werden.

Die Höhenverstelleinrichtung 22 ist an einer Linearführung 23 gelagert, welche sich in Längsrichtung 24 der Bearbeitungsanlage 1 erstreckt. Somit können die Greifvorrichtungen 13, 14 in Längsrichtung 24 verstellt werden.

Die Höhenverstelleinrichtung 22 umfasst Führungsschienen an welchen der Greifvorrichtungsträger 18 verschiebbar gelagert ist. Als Antrieb für die Höhenverstelleinrichtung 22 kann beispielsweise ein Elektromotor, insbesondere ein Servomotor, und eine daran angeschlossene Verstellspindel dienen. Natürlich können auch sonstige Antriebseinheiten, wie etwa ein Zahnriemen, eine Zahnstange oder sonstiges verwendet werden.

Die Linearführung 23 umfasst ebenfalls Führungsschienen mittels welchen die Höhenverstelleinrichtung 22 verschiebbar am Grundgestell der Bearbeitungsanlage 1 gelagert ist. Als Antrieb für die Linearführung 23 kann beispielsweise ein Elektromotor, welcher mit einer Zahnstange zusammenwirkt, verwendet werden.

Darüber hinaus kann, wie aus Fig 1 ersichtlich, vorgesehen sein, dass eine Werkzeugeinlegestation 25 ausgebildet ist, in welcher Bearbeitungswerkzeuge 4 eingelegt und von den Greifvorrichtungen 13, 14 gegriffen werden können.

Die Werkzeugeinlegestation 25 kann Fördereinrichtungen umfassen, mittels welchen die Bearbeitungswerkzeuge 4 an einer Einlegeposition zu einer weiteren Position gefördert werden können, in welcher die Bearbeitungswerkzeuge 4 mittels der Greifvorrichtungen 13, 14 gegriffen werden können. Insbesondere ist es auch denkbar, dass nur eine Werkzeugeinlegestation 25 vorgesehen ist, in welcher Werkzeuge sowohl für den ersten Werkzeugmagazinabschnitt 7 als auch für den zweiten Werkzeugmagazinabschnitt 8 eingelegt werden können.

Darüber hinaus kann vorgesehen sein, dass eine Messvorrichtung 26 ausgebildet ist, welche zum Vermessen von benutzten Bearbeitungswerkzeugen 4 dient. Insbesondere kann hierbei vorgesehen sein, dass die Bearbeitungswerkzeuge 4 nach der Entnahme aus den Arbeitsspindeln 2, 3 mittels der Greifvorrichtungen 13, 14 zur Messvorrichtung 26 bewegt werden und dort vermessen werden. Insbesondere kann vorgesehen sein, dass die Messvorrichtung 26 im Nahbereich der Arbeitsspindeln 2, 3 ausgebildet ist.

In der Fig. 2 ist eine Detailansicht der Bearbeitungsanlage 1 gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in den vorangegangenen Fig. 1 hingewiesen bzw. Bezug genommen.

Fig. 2 zeigt eine perspektivische Darstellung eines Ausführungsbeispiels des Greifvorrichtungsträgers 18 mitsamt der ersten Greifvorrichtung 13 und der zweiten Greifvorrichtung 14. Wie aus Fig. 2 gut ersichtlich, sind die Greifvorrichtungen 13, 14 mittels einer Führungsschiene 27 verschiebbar am Greifvorrichtungsträger 18 gelagert. Dadurch können die Greifvorrichtungen 13, 14 in Querrichtung 19 verschoben werden. Insbesondere kann vorgesehen sein, dass der Antriebsmotor 20 zum Verschieben der Greifvorrichtungen 13, 14 mit einem Zahnriemen 28 gekoppelt ist, wobei der Zahnriemen 28 mit einem ersten Mitnehmerelement 29 und einem zweiten Mitnehmerelement 30 verbunden ist. Das erste Mitnehmerelement 29 wirkt mit der ersten Greifvorrichtung 13 zusammen und das zweite Mitnehmerelement 30 mit der zweiten Greifvorrichtung 14.

Wie aus Fig. 2 ersichtlich, sind die beiden Mitnehmerelemente 29, 30 an gegenüberliegenden Seiten des Zahnriemens 28 angeordnet, wodurch bei Bewegung des Zahnriemens 28 mittels dem Antriebsmotor 20, die beiden Greifvorrichtungen 13, 14 gegengleich zueinander verschoben werden.

Wie aus Fig. 2 gut ersichtlich, kann insbesondere vorgesehen sein, dass die Greifvorrichtungen 13, 14 an einer ersten Verschiebeeinheit 31 bzw. an einer zweiten Verschiebeeinheit 32 angeordnet sind, welche relativ zum Greifvorrichtungsträger 18 verschiebbar sind. Die Greifeinheiten 15, 16 können relativ zu den Verschiebeeinheiten 31, 32 und somit relativ zum Greifvorrichtungsträger 18 bezüglich einer Hochachse 21 verdrehbar sein. Insbesondere kann vorgesehen sein, dass je Greifvorrichtung 13, 14 ein eigener Drehmotor 33 ausgebildet ist, mittels welchem die Greifvorrichtungen 13, 14 relativ zur Verschiebeeinheit 31, 32 verdrehbar sind. Der Drehmotor 33 kann entweder direkt oder mittels einem Zahnrad oder Getriebe mit der Greifvorrichtung 13, 14 gekoppelt sein. Darüber hinaus kann der Drehmotor 33 an der Verschiebeeinheit 31, 32 aufgenommen bzw. angeordnet sein.

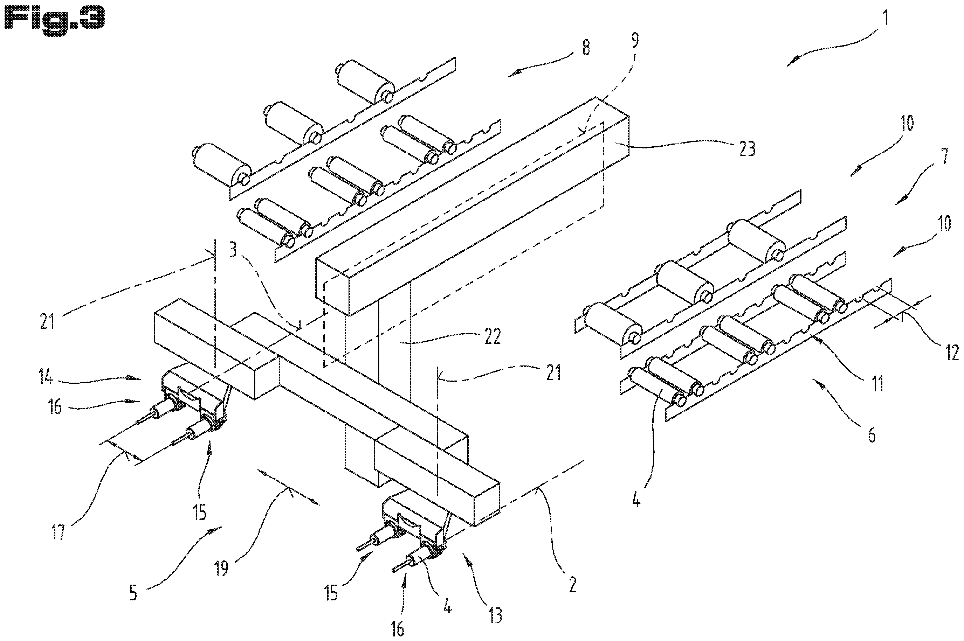

In den Fig. 3 bis 6 ist eine weitere und gegebenenfalls für sich eigenständige Ausführungsform der Bearbeitungsanlage 1 gezeigt, wobei wiederum für gleiche Teile gleiche Bezugszeichen bzw. Bauteilbezeichnungen wie in den vorangegangenen Figuren 1 und 2 verwendet werden. Um unnötige Wiederholungen zu vermeiden, wird auf die detaillierte Beschreibung in den vorangegangenen Figuren 1 und 2 hingewiesen bzw. Bezug genommen.

In den Fig. 3 bis 6 ist die Bearbeitungsanlage 1 in einer stark vereinfachten Darstellung gezeigt, wobei einzelne Verfahrensschritte beim Durchführen eines Werkzeugwechsels dargestellt werden.

Wie aus Fig. 3 ersichtlich, befindet sich jeweils in der ersten Greifeinheit 15 der beiden Greifvorrichtungen 13, 14 ein neues Bearbeitungswerkzeug 4, welches beim nächsten Bearbeitungsschritt zum Einsatz kommen soll und die zweiten Greifeinheiten 16 sind frei. Die Greifvorrichtungen 13, 14 werden hierbei so zu den Arbeitsspindeln 2, 3 bewegt, dass jeweils mittels der zweiten Greifeinheit 16 das aktuell in der Arbeitsspindel 2, 3 aufgenommene Bearbeitungswerkzeug 4 gegriffen und aus der Arbeitsspindel 2, 3 herausgenommen werden kann.

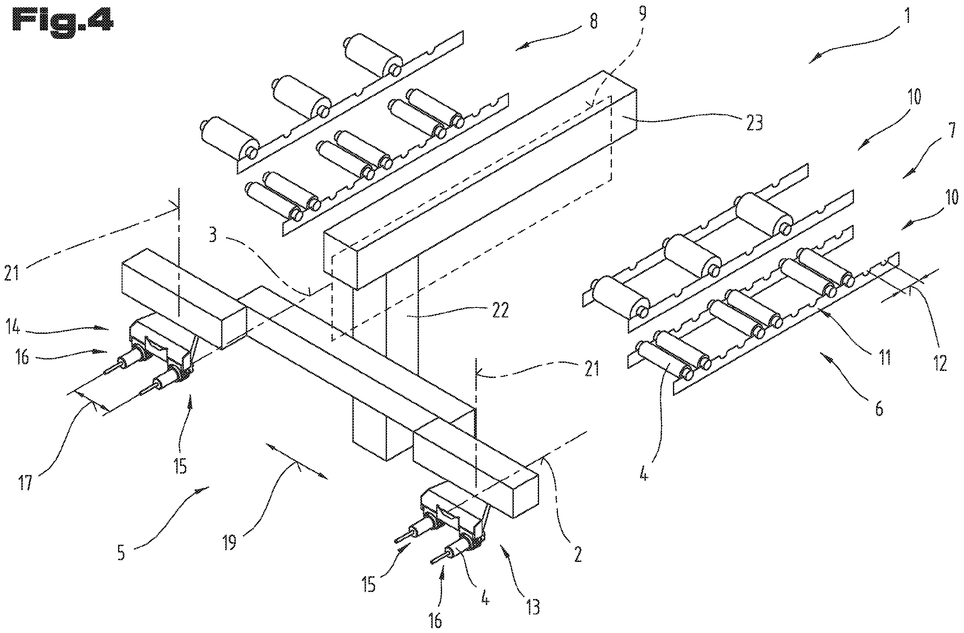

Anschließend werden gemäß der Darstellung aus Fig. 4 die beiden Greifvorrichtungen 13, 14 in Querrichtung 19 verschoben, sodass das neue Bearbeitungswerkzeug, welches in den ersten Greifeinheiten 15 aufgenommen ist, in die Arbeitsspindel 2, 3 eingesetzt werden kann.

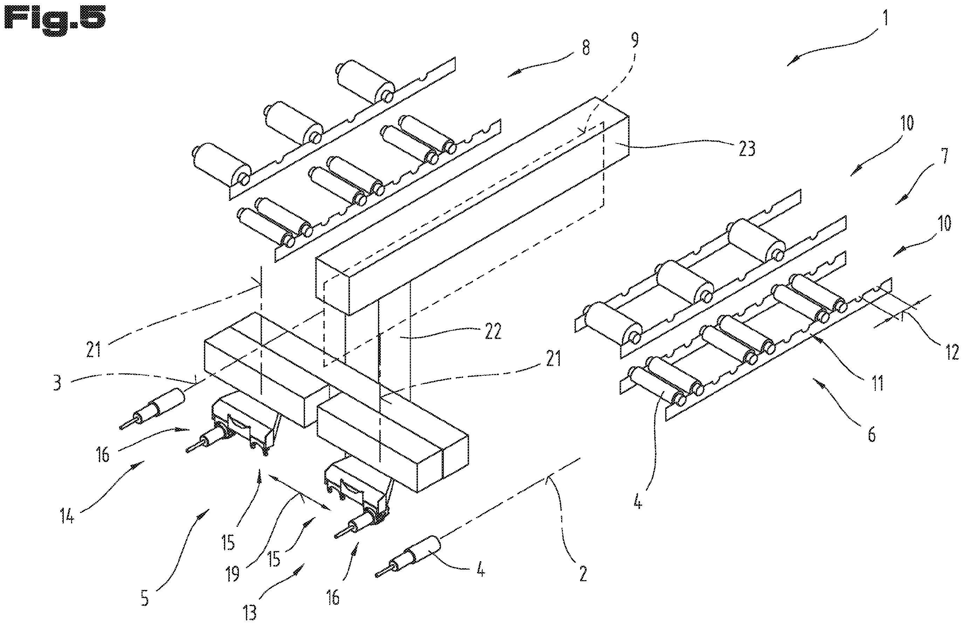

Wenn das Bearbeitungswerkzeug 4 in die Arbeitsspindel 2, 3 eingesetzt ist, kann das in der zweiten Greifeinheit 16 aufgenommene Bearbeitungswerkzeug 4 zum Werkzeugmagazin 6 verbracht werden, wie dies in Fig. 5 dargestellt ist.

Optional kann vorher noch mittels der Messvorrichtung 26 der Verschleiß des Bearbeitungswerkzeuges 4 ermittelt werden.

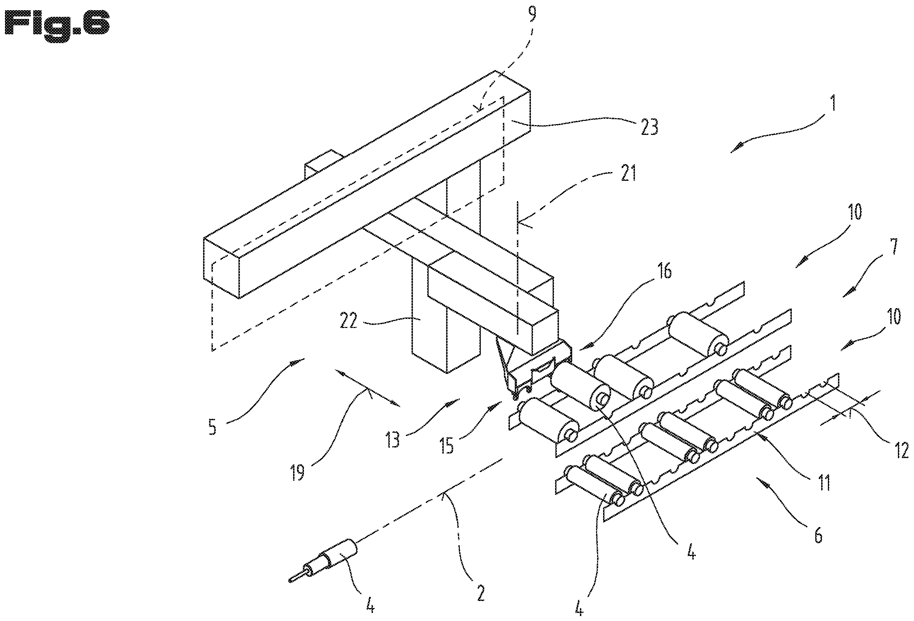

Wenn die Greifvorrichtungen 13, 14 nun zum Werkzeugmagazin 6 bewegt werden, ist die erste Greifeinheit 15 frei und in der zweiten Greifeinheit 16 ist das bereits benutzte Bearbeitungswerkzeug 4 aufgenommen. Die Greifvorrichtungen 13, 14 werden entsprechend der Darstellung in Fig. 6 so zu einer Speicherebene 10 verfahren, dass das bereits benutzte Bearbeitungswerkzeug 4 an einem freien Werkzeugaufnahmeplatz 11 abgelegt werden kann und gleichzeitig in einem Werkzeugaufnahmeplatz 11, welcher im Greifeinheitenabstand 17 beabstandet ist, ein neues für den nächsten Bearbeitungsvorgang vorgesehenes Bearbeitungswerkzeug 4 aufgenommen werden kann. Hierbei wird die zweite Greifeinheit 16 geöffnet, um das hierin aufgenommene Bearbeitungswerkzeug 4 ablegen zu können und die erste Greifeinheit 15 wird geschlossen, um das neue Bearbeitungswerkzeug 4 aufnehmen zu können. Anschließend kann die Greifvorrichtung 13, 14 wieder zu den Arbeitsspindeln 2, 3 bewegt werden, um das neue Bearbeitungswerkzeug 4 einsetzen zu können.

Das Einsetzen des neuen Bearbeitungswerkzeuges 4 passiert analog zu den bereits beschriebenen Verfahrensschritten, wobei jetzt nicht die zweite Greifeinheit 16 sondern die erste Greifeinheit 15 zur Aufnahme des bereits in der Arbeitsspindel 2, 3 aufgenommenen Bearbeitungswerkzeuges dient.

Es ist somit vorgesehen, dass bei jedem zweiten Verfahrensdurchgang die erste Greifeinheit 15 zur Aufnahme des in der Arbeitsspindel 2 gespannten Bearbeitungswerkzeuges dient und in jedem zweiten Bearbeitungsvorgang die zweite Greifeinheit 16 zur Aufnahme des in der Arbeitsspindel 2, 3 gespannten Bearbeitungswerkzeuges 4 dient.

Außerdem können die Greifvorrichtungen 13, 14 dazu verwendet werden, um während länger andauernden Bearbeitungsvorgängen die Bearbeitungswerkzeuge 4 im Werkzeugmagazin 6 neu zu sortieren.

Wie aus den Figuren 1 bis 6 ersichtlich, können die Werkzeugaufnahmeplätze 11 durch eine Ablageschiene gebildet sein, welche das Bearbeitungswerkzeuge 4 aufnehmen kann. Bei Verwendung einer einzelnen Ablageschiene muss das Bearbeitungswerkzeug 4 so in der Ablageschiene gelagert sein, dass durch eine formschlüssige Verbindung ein sicheres halten des Bearbeitungswerkzeuges 4 in der Ablageschiene erreicht werden kann. Bei Verwendung von zwei im Abstand zueinander angeordneten Ablageschienen kann das Bearbeitungswerkzeug 4 an beiden Ablageschienen aufliegen.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Bearbeitungsanlage | 30 | zweites Mitnehmerelement |
| 2 | erste Arbeitsspindel | 31 | erste Verschiebeeinheit |
| 3 | zweite Arbeitsspindel | 32 | zweite Verschiebeeinheit |
| 4 | Bearbeitungswerkzeug | 33 | Drehmotor |
| 5 | Werkzeugwechselvorrichtung | | |
| 6 | Werkzeugmagazin | | |
| 7 | erster Werkzeugmagazinabschnitt | | |
| 8 | zweiter Werkzeugmagazinabschnitt | | |
| 9 | Mittelebene | | |
| 10 | Speicherebene | | |
| 11 | Werkzeugaufnahmeplatz | | |
| 12 | Abstand | | |
| 13 | erste Greifvorrichtung | | |
| 14 | zweite Greifvorrichtung | | |
| 15 | erste Greifeinheit | | |
| 16 | zweite Greifeinheit | | |
| 17 | Greifeinheitenabstand | | |
| 18 | Greifvorrichtungsträger | | |
| 19 | Querrichtung | | |
| 20 | Antriebsmotor | | |
| 21 | Hochachse | | |
| 22 | Höhenverstelleinrichtung | | |
| 23 | Linearführung | | |
| 24 | Längsrichtung | | |
| 25 | Werkzeugeinlegestation | | |
| 26 | Messvorrichtung | | |
| 27 | Führungsschiene | | |
| 28 | Zahnriemen | | |
| 29 | erstes Mitnehmerelement | | |

## Patentansprüche

1. Verfahren zum Durchführen eines Werkzeugwechsels an einer Bearbeitungsanlage (1) mit
zumindest einer ersten Arbeitsspindel (2) ;
einem Werkzeugmagazin (6) zum Lagern von unterschiedlichen Bearbeitungswerkzeugen (4), wobei im Werkzeugmagazin (6) zumindest eine Speicherebene (10) mit mehreren nebeneinander angeordneten Werkzeugaufnahmeplätzen (11) vorgesehen ist;
eine Werkzeugwechselvorrichtung (5) mit zumindest einer ersten Greifvorrichtung (13) zum Auswechseln des in der Arbeitsspindel (2) aufgenommenen Bearbeitungswerkzeuges (4), wobei die Greifvorrichtung (13) zumindest eine erste Greifeinheit (15) und eine zweite Greifeinheit (16) aufweist, welche in einem Greifeinheitenabstand (17) zueinander angeordnet sind, wobei das Verfahren die folgenden Verfahrensschritte umfasst:
- Entnehmen eines bereits benutzten Bearbeitungswerkzeuges (4) aus der Arbeitsspindel (2) mittels der ersten Greifeinheit (15);
- Einsetzen eines in der zweiten Greifeinheit (16) aufgenommenen Bearbeitungswerkzeuges (4) in die Arbeitsspindel (2);
- Bewegen der Greifvorrichtung (13) zum Werkzeugmagazin (6) zur Aufnahme eines neuen Bearbeitungswerkzeuges (4) vom Werkzeugmagazin (6) in die Greifvorrichtung (13) und gleichzeitigem Ablegen des bereits benutzten Bearbeitungswerkzeuges (4) von der Greifvorrichtung (13) in das Werkzeugmagazin (6); und zeitgleich
- Bearbeiten eines Werkstückes mittels dem in der Arbeitsspindel (2) aufgenommenen Bearbeitungswerkzeug (4),
**dadurch gekennzeichnet, dass** neben der ersten Arbeitsspindel (2) eine zweite Arbeitsspindel (3) angeordnet ist, wobei die Arbeitsspindeln (2, 3) parallel zueinander angeordnet sind und zur Aufnahme jeweils eines Bearbeitungswerkzeuges (4) dienen und dass die Werkzeugwechselvorrichtung (5) eine zweite Greifvorrichtung (14) aufweist, wobei die beiden Greifvorrichtungen (13, 14) synchron zueinander bewegt werden und gleichzeitig die beiden Arbeitsspindeln (2, 3) bedienen.

2. Verfahren nach Anspruch 1, **dadurch gekennzeichnet, dass** zur Aufnahme eines neuen Bearbeitungswerkzeuges (4) vom Werkzeugmagazin (6) in die Greifvorrichtung (13, 14) und gleichzeitigem Ablegen des bereits benutzten Bearbeitungswerkzeuges (4) von der Greifvorrichtung (13, 14) in das Werkzeugmagazin (6), die Bearbeitungswerkzeuge (4) derart in der Speicherebene (10) angeordnet sind, dass das neue Bearbeitungswerkzeug (4) an einem ersten Werkzeugaufnahmeplatz (11) angeordnet ist und im Greifeinheitenabstand (17) zum ersten Werkzeugaufnahmeplatz (11) ein zweiter Werkzeugaufnahmeplatz (11) frei ist, welcher zum Ablegen des bereits benutzten Bearbeitungswerkzeuges (4) von der Greifvorrichtung (13, 14) in das Werkzeugmagazin (6) dient.

3. Verfahren nach einem der vorhergehenden Ansprüche, **dadurch gekennzeichnet, dass** Bearbeitungswerkzeuge (4) in einer Werkzeugeinlegestation (25) manuell eingelegt werden können und in weiterer Folge mittels einer Greifeinheit (15, 16) aufgenommen werden können.

4. Verfahren nach einem der vorhergehenden Ansprüche, **dadurch gekennzeichnet, dass** bei ausgewählten Bearbeitungsvorgängen, insbesondere bei Bearbeitungsvorgängen mit langer Bearbeitungsdauer, während dem Bearbeiten des Werkstückes, die im Werkzeugmagazin (6) gelagerten Bearbeitungswerkzeuge (4) mittels der Greifvorrichtung (13, 14) neu sortiert werden.

5. Verfahren nach einem der vorhergehenden Ansprüche, **dadurch gekennzeichnet, dass** Bearbeitungswerkzeuge (4), welche in der Bearbeitungsreihenfolge auf jene Bearbeitungswerkzeuge (4) folgen mittels denen kürzer andauernde Bearbeitungsschritte durchgeführt werden, näher an der Arbeitsspindel (2, 3) gelagert werden als Bearbeitungswerkzeuge (4), welche in der Bearbeitungsreihenfolge auf jene Bearbeitungswerkzeuge (4) folgen mittels denen länger andauernde Bearbeitungsschritte durchgeführt werden.

6. Verfahren nach einem der vorhergehenden Ansprüche, **dadurch gekennzeichnet, dass** Bearbeitungswerkzeuge (4), welche öfter verwendet werden, näher an der Arbeitsspindel (2, 3) gelagert werden als Bearbeitungswerkzeuge (4) welche weniger oft verwendet werden.

7. Verfahren nach einem der vorhergehenden Ansprüche, **dadurch gekennzeichnet, dass** das bereits benutzte Bearbeitungswerkzeug (4) nach der Entnahme aus der Arbeitsspindel (2, 3) mittels der Greifvorrichtung (13, 14) einer Messvorrichtung (26) zugeführt wird, in welcher eine Abnutzung des Bearbeitungswerkzeuges (4) erfasst wird.

8. Bearbeitungsanlage (1) umfassend:
zumindest eine erste Arbeitsspindel (2);
ein Werkzeugmagazin (6) zum Lagern von unterschiedlichen Bearbeitungswerkzeugen (4),
wobei im Werkzeugmagazin (6) zumindest eine Speicherebene (10) mit mehreren nebeneinander angeordneten Werkzeugaufnahmeplätzen (11) vorgesehen ist;
eine Werkzeugwechselvorrichtung (5) mit zumindest einer ersten Greifvorrichtung (13) zum Auswechseln des in der Arbeitsspindel (2) aufgenommenen Bearbeitungswerkzeuges (4), wobei die Greifvorrichtung (13) zumindest eine erste Greifeinheit (15) und eine zweite Greifeinheit (16) aufweist, welche in einem Greifeinheitenabstand (17) zueinander angeordnet sind, und zur Aufnahme eines neuen Bearbeitungswerkzeuges (4) vom Werkzeugmagazin (6) in die Greifvorrichtung (13) und gleichzeitigem Ablegen des bereits benutzten Bearbeitungswerkzeuges (4) von der Greifvorrichtung (13) in das Werkzeugmagazin (6) ausgebildet sind,
wobei die Greifeinheit (15) zwischen der Arbeitsspindel (2) und dem Werkzeugmagazin (6) verlagerbar ist,
**dadurch gekennzeichnet, dass** neben der ersten Arbeitsspindel (2) eine zweite Arbeitsspindel (3) angeordnet ist, wobei die Arbeitsspindeln (2, 3) parallel zueinander angeordnet sind und zur Aufnahme jeweils eines Bearbeitungswerkzeuges (4) dienen und dass die Werkzeugwechselvorrichtung (5) eine zweite Greifvorrichtung (14) aufweist, wobei die beiden Greifvorrichtungen (13, 14) synchron zueinander bewegbar sind und dadurch gleichzeitig die beiden Arbeitsspindeln (2, 3) bedienbar sind.

9. Bearbeitungsanlage nach Anspruch 8, **dadurch gekennzeichnet, dass** die beiden Greifvorrichtungen (13, 14) miteinander gekoppelt sind.

10. Bearbeitungsanlage nach Anspruch 8 oder 9, **dadurch gekennzeichnet, dass** der Abstand (12) zwischen zwei zueinander benachbarten Werkzeugaufnahmeplätzen (11) einer Speicherebene (10), dem Greifeinheitenabstand (17) oder einem Stammbruch des Greifeinheitenabstandes (17) entspricht.

11. Bearbeitungsanlage nach einem der Ansprüche 8 bis 10, **dadurch gekennzeichnet, dass** im Werkzeugmagazin (6) mehrere Speicherebenen (10) übereinander angeordnet sind, wobei der Abstand (12) zwischen zwei zueinander benachbarten Werkzeugaufnahmeplätzen (11) in den verschiedenen Speicherebenen (10) unterschiedlich groß ist.

12. Bearbeitungsanlage nach einem der Ansprüche 8 bis 11, **dadurch gekennzeichnet, dass** die Greifvorrichtungen (13, 14) in Querrichtung (19) verschiebbar an einem Greifvorrichtungsträger (18) gelagert sind.

13. Bearbeitungsanlage nach Anspruch 12, **dadurch gekennzeichnet, dass** die Greifvorrichtungen (13, 14) mittels einem zentralen Antriebsmotor (20) in Querrichtung (19) verschiebbar sind und gegengleich zueinander verschoben werden.

14. Bearbeitungsanlage nach einem der Ansprüche 8 bis 13, **dadurch gekennzeichnet, dass** die Greifvorrichtungen (13, 14) bezüglich einer Hochachse (21) schwenkbar am Greifvorrichtungsträger (18) gelagert sind.

15. Bearbeitungsanlage nach einem der Ansprüche 8 bis 13, **dadurch gekennzeichnet, dass** der Greifvorrichtungsträger (18) höhenverstellbar an einer Höhenverstelleinrichtung (22) gelagert ist.

16. Bearbeitungsanlage nach einem der Ansprüche 8 bis 15, **dadurch gekennzeichnet, dass** die Höhenverstelleinrichtung (22) mittels einer Linearführung (23) in einer parallel zur Spindelachse der Arbeitsspindel (2, 3) verlaufenden Längsrichtung (24) verschiebbar gelagert ist.

17. Bearbeitungsanlage nach einem der Ansprüche 8 bis 16, **dadurch gekennzeichnet, dass** die Linearführung (23) mittig der Bearbeitungsanlage (1) angeordnet ist.

18. Bearbeitungsanlage nach einem der Ansprüche 8 bis 17, **dadurch gekennzeichnet, dass** ein erster Werkzeugmagazinabschnitt (7) ausgebildet ist, welcher der ersten Arbeitsspindel (2) zugeordnet ist und ein zweiter Werkzeugmagazinabschnitt (8) ausgebildet ist, welcher der zweiten Arbeitsspindel (3) zugeordnet ist, wobei die beiden Werkzeugmagazinabschnitte (7, 8) symmetrisch bezüglich einer Mittelebene (9) an der Bearbeitungsanlage (1) angeordnet sind.

19. Bearbeitungsanlage nach einem der Ansprüche 8 bis 18, **dadurch gekennzeichnet, dass** das Werkzeugmagazin (6) zwei im Abstand (12) zueinander angeordnete Speichersysteme mit jeweils mehreren übereinander angeordneten Werkzeugaufnahmeplätzen (11) aufweist, wobei die Speichersysteme relativ zueinander höhenverstellbar sind, sodass verschiedene Paarungen von Werkzeugaufnahmeplätzen (11) einstellbar sind.

## Claims

1. A method for performing a tool change on a processing plant (1) with
at least one first working spindle (2);
a tool magazine (6) for storing different processing tools (4), wherein at least one storage plane (10) having several tool receiving spaces (11) arranged next to one another is provided in the tool magazine (6);
a tool change device (5) comprising at least one first gripper device (13) for exchanging the processing tool (4) held in the working spindle (2), wherein the gripper device (13) comprises at least one first gripper unit (15) and one second gripper unit (16) which are positioned at a gripper-unit distance (17) from one another,
wherein the method comprises the following method steps:
- removing a processing tool (4) that has already been used from the working spindle (2) by means of the first gripper unit (15);
- inserting a processing tool (4) held in the second gripper unit (16) into the working spindle (2);
- moving the gripper device (13) to the tool magazine (6) for receiving a new processing tool (4) from the tool magazine (6) into the gripper device (13) and simultaneously placing the already used processing tool (4) from the gripper device (13) into the tool magazine (6); and simultaneously
- processing a workpiece by means of the processing tool (4) held in the working spindle (2),
**characterized in that** a second working spindle (3) is arranged next to the first working spindle (2), wherein the working spindles (2, 3) are arranged in parallel to one another and serve for receiving one processing tool (4) each and that the tool change device (5) comprises a second gripper device (14), wherein the two gripper devices (13, 14) are moved synchronously to one another and simultaneously operate the two working spindles (2, 3).

2. The method according to claim 1, **characterized in that** for receiving a new processing tool (4) from the tool magazine (6) into the gripper device (13, 14) and simultaneous placing of the already used processing tool (4) from the gripper device (13, 14) into the tool magazine (6), the processing tools (4) are arranged in the storage plane (10) such that the new processing tool (4) is arranged in a first tool receiving space (11) and in the gripper-unit distance (17) to the first tool receiving space (11) a second tool receiving space (11), which serves for placing the already used processing tool (4) from the gripper device (13, 14) into the tool magazine (6), is free.

3. The method according to one of the preceding claims, **characterized in that** processing tools (4) can be manually inserted in a tool insertion station (25) and in further consequence can be collected by means of a gripper unit (15, 16).

4. The method according to one of the preceding claims, **characterized in that** in selected processing operations, in particular in processing operations with a long processing time, the processing tools (4) stored in the tool magazine (6) are newly sorted by means of the gripper device (13, 14) during processing of the workpiece.

5. The method according to one of the preceding claims, **characterized in that** processing tools (4) which in the processing sequence follow such processing tools (4) by means of which shorter processing steps are carried out are stored closer to the working spindle (2, 3) than processing tools (4) which in the processing sequence follow such processing tools (4) by means of which longer processing steps are carried out.

6. The method according to one of the preceding claims, **characterized in that** processing tools (4) which are used more often are stored closer to the working spindle (2, 3) than processing tools (4), which are used less often.

7. The method according to one of the preceding claims, **characterized in that** the already used processing tool (4) after removal from the working spindle (2, 3) is guided to a measuring device (26), in which wear of the processing tool (4) is detected, by means of the gripper device (13, 14).

8. A processing plant (1) comprising:
at least one first working spindle (2);
a tool magazine (6) for storing different processing tools (4), wherein at least one storage plane (10) having several tool receiving spaces (11) arranged next to one another is provided in the tool magazine (6);
a tool change device (5) comprising at least one first gripper device (13) for exchanging the processing tool (4) held in the working spindle (2), wherein the gripper device (13) comprises at least one first gripper unit (15) and one second gripper unit (16) which are positioned at a gripper-unit distance (17) from one another, and are configured for receiving a new processing tool (4) from the tool magazine (6) ) into the gripper device (13) and simultaneous placing of the already used processing tool (4) from the gripper device (13) into the tool magazine (6),
wherein
the gripper unit (15) can be displaced between the working spindle (2) and the tool magazine (6),
**characterized in that** a second working spindle (3) is arranged next to the first working spindle (2), wherein the working spindles (2, 3) are arranged in parallel to one another and serve for receiving one processing tool (4) each and that the tool change device (5) comprises a second gripper device (14), wherein the two gripper devices (13, 14) are movable synchronously to one another and thereby the two working spindles (2, 3) are simultaneously operable.

9. The processing plant according to claim 8, **characterized in that** the two gripper devices (13, 14) are coupled to one another.

10. The processing plant according to claim 8 or 9, **characterized in that** the distance (12) between two adjacent tool receiving spaces (11) of a storage plane (10) corresponds to the gripper-unit distance (17) or to a unit fraction of the gripper-unit distance (17).

11. The processing plant according to one of claims 8 to 10, **characterized in that** several storage planes (10) are arranged on top of one another in the tool magazine (6), wherein the distance (12) between two adjacent tool receiving spaces (11) in the different storage planes (10) is of different size.

12. The processing plant according to one of claims 8 to 11, **characterized in that** the gripper devices (13, 14) are mounted on a gripper device cradle (18) so as to be displaceable in transverse direction (19).

13. The processing plant according to claim 12, **characterized in that** the gripper devices (13, 14) are displaceable in transverse direction (19) by means of a central drive motor (20) and are displaced in opposite directions to one another.

14. The processing plant according to one of claims 8 to 13, **characterized in that** the gripper devices (13, 14) are mounted on a gripper device cradle (18) so as to be pivotable with respect to a vertical axis (21).

15. The processing plant according to one of claims 8 to 13, **characterized in that** the gripper device cradle (18) is mounted on a height-adjustment device (22) so as to be adjustable in height.

16. The processing plant according to one of claims 8 to 15, **characterized in that** the height-adjustment device (22) is mounted so as to be displaceable in a longitudinal direction (24) extending in parallel to the spindle axis of the working spindle (2, 3) by means of a linear guide (23).

17. The processing plant according to one of claims 8 to 16, **characterized in that** the linear guide (23) is arranged at the center of the processing plant (1).

18. The processing plant according to one of claims 8 to 17, **characterized in that** a first tool magazine section (7) is formed, which is assigned to the first working spindle (2), and a second tool magazine section (8) is formed, which is assigned to the second working spindle (3), wherein the two tool magazine sections (7, 8) are arranged on the processing plant (1) symmetrically with respect to a mid-plane (9).

19. The processing plant according to one of claims 8 to 18, **characterized in that** the tool magazine (6) comprises two storage systems arranged at a distance (12) from one another and each having several tool receiving spaces (11) arranged on top of one another, wherein the storage systems are adjustable in height relative to one another such that different pairings of tool receiving spaces (11) can be set.

## Revendications

1. Procédé pour la réalisation d'un changement d'outil sur un système d'usinage (1) avec
au moins une première broche de travail (2) ;
un magasin d'outils (6) pour le stockage de différents outils d'usinage (4), dans lequel, dans le magasin d'outils (6) est prévu au moins un plan de stockage (10) avec plusieurs emplacements de logement d'outils (11) juxtaposés ;
un dispositif de changement d'outil (5) avec au moins un premier dispositif de préhension (13) pour le changement de l'outil d'usinage (4) logé dans la broche de travail (2), dans lequel le dispositif de préhension (13) comprend au moins une première unité de préhension (15) et une deuxième unité de préhension (16), qui sont disposées à une distance d'unités de préhension (17) entre elles, dans lequel le procédé comprend les étapes suivantes :
- retrait d'un outil d'usinage (4) déjà utilisé hors de la broche de travail (2) au moyen de la première unité de préhension (15) ;
- introduction d'un outil d'usinage (4) logé dans la deuxième unité de préhension (16) dans la broche de travail (2) ;
- déplacement du dispositif de préhension (13) vers le magasin d'outils (6) pour le logement d'un nouvel outil d'usinage (4) du magasin d'outils (6) vers le dispositif de préhension (13) et dépôt simultané de l'outil d'usinage (4) déjà utilisé du dispositif de préhension (13) dans le magasin d'outils (6) ; et simultanément
- usinage d'une pièce au moyen de l'outil d'usinage (4) logé dans la broche de travail (2), **caractérisé en ce que**, à côté de la première broche de travail (2), est disposée une deuxième broche de travail (3), dans lequel les broches de travail (2, 3) sont disposées parallèlement entre elles et permettent chacune de prendre en charge un outil d'usinage (4) et **en ce que** le dispositif de changement d'outil (5) comprend un deuxième dispositif de préhension (14), dans lequel les deux dispositifs de préhension (13, 14) sont déplacés de manière synchrone entre eux et desservent simultanément les deux broches de travail (2, 3).

2. Procédé selon la revendication 1, **caractérisé en ce que**, pour la prise en charge d'un nouvel outil d'usinage (4) du magasin d'outil (6) vers le dispositif de préhension (13, 14) et le dépôt simultané de l'outil d'usinage (4) déjà utilisé du dispositif de préhension (13, 14) dans le magasin d'outil (6), les outils d'usinage (4) sont disposés dans le plan de stockage (10) de façon à ce que le nouvel outil d'usinage (4) soit disposé au niveau d'un premier emplacement de logement d'outil (11) et, à la distance des unités de préhension (17) par rapport au premier emplacement de logement d'outil (11), un deuxième emplacement de logement d'outil (11) est libre, qui permet le dépôt de l'outil d'usinage (4) déjà utilisé du dispositif de préhension (13, 14) vers le magasin d'outils (6).

3. Procédé selon l'une des revendications précédentes, **caractérisé en ce que** les outils d'usinage (4) peuvent être déposés manuellement dans une station d'insertion d'outil (25) et peuvent ensuite être pris en charge au moyen d'une unité de préhension (15, 16).

4. Procédé selon l'une des revendications précédentes, **caractérisé en ce que**, dans des processus d'usinage sélectionnés, plus particulièrement dans des processus d'usinage avec une longue durée d'usinage, pendant l'usinage de la pièce, les outils d'usinage (4) stockés dans le magasin d'outils (6) sont à nouveau triés au moyen du dispositif de préhension (13, 14).

5. Procédé selon l'une des revendications précédentes, **caractérisé en ce que** les outils d'usinage (4) qui, dans l'ordre d'usinage, suivent les outils d'usinage (4) au moyen desquels des étapes d'usinage plus courtes sont exécutées, sont stockés plus près de la broche de travail (2, 3) que les outils d'usinage (4) qui, dans l'ordre d'usinage, suivent les outils d'usinage (4) au moyen desquels des étapes d'usinage plus longues sont exécutées.

6. Procédé selon l'une des revendications précédentes, **caractérisé en ce que** les outils d'usinage (4) qui sont utilisés plus fréquemment sont stockés plus près de la broche de travail (2, 3) que les outils d'usinage (4) qui sont utilisés moins fréquemment.

7. Procédé selon l'une des revendications précédentes, **caractérisé en ce que** les outils d'usinage (4) déjà utilisés sont introduits, après le retrait hors de la broche de travail (2, 3), au moyen du dispositif de préhension (13, 14), dans un dispositif de mesure (26) dans lequel une usure de l'outil d'usinage (4) est mesurée.

8. Système d'usinage (1) comprenant :
au moins une première broche de travail (2) ;
un magasin d'outils (6) pour le stockage de différents outils d'usinage (4), dans lequel, dans le magasin d'outils (6) est prévu au moins un plan de stockage (10) avec plusieurs emplacements de logement d'outils (11) juxtaposés ;
un dispositif de changement d'outil (5) avec au moins un premier dispositif de préhension (13) pour le changement de l'outil d'usinage (4) logé dans la broche de travail (2), dans lequel le dispositif de préhension (13) comprend au moins une première unité de préhension (15) et une deuxième unité de préhension (16), qui sont disposées à une distance d'unités de préhension (17) entre elles,
et qui sont conçues pour la prise en charge d'un nouvel outil d'usinage (4) du magasin d'outil (6) vers le dispositif de préhension (13) et le dépôt simultané de l'outil d'usinage (4) déjà utilisé du dispositif d'usinage (13) vers le magasin d'outils (6),
dans lequel l'unité de préhension (15) est mobile entre la broche de travail (2) et le magasin d'outil (6),
**caractérisé en ce que**, à côté de la première broche de travail (2), est disposée une deuxième broche de travail (3), dans lequel les broches de travail (2, 3) sont disposées parallèlement entre elles et permettent chacune de prendre en charge un outil d'usinage (4) et **en ce que** le dispositif de changement d'outil (5) comprend un deuxième dispositif de préhension (14), dans lequel les deux dispositifs de préhension (13, 14) peuvent être déplacés de manière synchrone entre eux et permettent de desservir simultanément les deux broches de travail (2, 3).

9. Système d'usinage selon la revendication 8, **caractérisé en ce que** les deux dispositifs de préhension (13, 14) sont couplés entre eux.

10. Système d'usinage selon la revendication 8 ou 9, **caractérisé en ce que** la distance (12) entre deux emplacements de logement d'outil (11) adjacents d'un plan de stockage (10) correspondant à la distance des unités de préhension (17) ou à une fraction de la distance des unités de préhension (17).

11. Système d'usinage selon l'une des revendications 8 à 10, **caractérisé en ce que**, dans le magasin d'outils (6) sont superposés plusieurs plans de stockage (10), dans lequel la distance (12) entre deux emplacements de logement d'outils (11) adjacents est différente dans les différents plans de stockage (10).

12. Système d'usinage selon l'une des revendications 8 à 11, **caractérisé en ce que** les dispositifs de préhension (13, 14) sont logés de manière coulissante dans la direction transversale (19) dans un support de dispositif de préhension (18).

13. Système d'usinage selon la revendication 12, **caractérisé en ce que** les dispositifs de préhension (13, 14) sont peuvent être coulissés au moyen d'un moteur d'entraînement central (20) dans la direction transversale (19) et sont coulissés de manière opposée entre eux.

14. Système d'usinage selon l'une des revendications 8 à 13, **caractérisé en ce que** les dispositifs de préhension (13, 14) sont logés de manière pivotante par rapport à un axe vertical (21) sur le support de dispositifs préhension (18).

15. Système d'usinage selon l'une des revendications 8 à 13, **caractérisé en ce que** le support de dispositifs préhension (18) est logé de manière réglable en hauteur au niveau d'un dispositif de réglage en hauteur (22).

16. Système d'usinage selon l'une des revendications 8 à 15, **caractérisé en ce que** le dispositif de réglage en hauteur (22) est logé de manière coulissante au moyen d'un guidage linéaire (23) dans une direction longitudinale (24) s'étendant parallèlement à l'axe de broche de la broche de travail (2, 3).

17. Système d'usinage selon l'une des revendications 8 à 16, **caractérisé en ce que** le guidage linéaire (23) est disposé au centre du système d'usinage (1).

18. Système d'usinage selon l'une des revendications 8 à 17, **caractérisé en ce qu'**une première portion de magasin d'outils (7) est réalisée, qui correspond à la première broche de travail (2) et une deuxième portion de magasin d'outils (8) est réalisée, qui correspond à la deuxième broche de travail (3), dans lequel les deux portions de magasin d'outils (7, 8) sont disposées de manière symétrique par rapport à un plan central (9) au niveau du système d'usinage (1).

19. Système d'usinage selon l'une des revendications 8 à 18, **caractérisé en ce que** le magasin d'outils (6) comprend deux systèmes de stockage disposés à une certaine distance (12) entre eux, avec chacun des emplacements de logement d'outils (11) superposés, dans lequel les systèmes de stockage sont réglables en hauteur les uns par rapport aux autres, de façon à ce que différents appariements d'emplacements de logement d'outils (11) puissent être réalisés.
